# EUROPÄISCHE PATENTSCHRIFT

(11) **EP 2 537 658 B1**
(45) Veröffentlichungstag und Bekanntmachung des Hinweises auf die Patenterteilung: **19.09.2018**
(21) Anmeldenummer: 12004585.1
(22) Anmeldetag: 19.06.2012
(51) Int. Cl.: B29C 44/34, B29C 44/42, B29C 45/17, B29C 45/60

(54) **Vorrichtung zum Spritzgiessen von Kunststoff-Formteilen aus thermoplastischem Kunststoff**
Device for injection moulding plastic parts made of thermoplastic
Dispositif de moulage par injection de pièces moulées en matière synthétique thermo-plastique

(30) Priorität: 24.06.2011 DE 102011105772
(43) Veröffentlichungstag der Anmeldung: 26.12.2012
(73) Patentinhaber: Wittmann Battenfeld GmbH, 2542 Kottingbrunn (AT)
(72) Erfinder: Eckardt, Helmut, 58540 Meinerzhagen (DE); Boellinghaus, Stefan, 58566 Kierspe (DE); Griessmann, rainer, 51702 Bergneustadt (DE); Halbfas, Michael, 57271 Hilchenbach-Luetzel (DE)
(74) Vertreter: Gosdin, Michael

(56) Entgegenhaltungen:
- JP-A- 2008 272 999
- JP-A- 2009 166 463
- US-A- 4 124 308
- US-A1- 2002 017 734
- US-A1- 2003 011 090
- US-B1- 6 435 853

## Beschreibung

Die Erfindung betrifft eine Vorrichtung zum Spritzgießen von Kunststoff-Formteilen aus thermoplastischem Kunststoff, gemäß Anspruch 1.

Eine solche Vorrichtung ist beispielsweise aus der US 2002/0017734 A1 bekannt. Ähnliche Lösungen zeigen die US 6 435 853 B1**,** die US 2003/ 0011090 A1**,** die JP 2009 166 463 A und die JP 2008 272 999 A**.** Eine weitere ähnliche Lösung zeigt die US 4 124 308 A**.**

Eine andere Vorrichtung ist aus der DE 198 48 151 A1 bekannt. Hier wird für die Herstellung von Kunststoff-Formteilen aus thermoplastischer Schmelze das Strukturschaumspritzen mit physikalischer Begasung der Schmelze eingesetzt. Bei diesem Verfahren wird mit Treibmittel versehene Schmelze in die Kavität eines Spritzgießwerkzeugs eingespritzt. Der Gasdruck drückt die Schmelze während der Abkühlung gegen die Kavitätswände, so dass abkühlungsbedingte Volumenkontraktionen ausgeglichen werden können und die Formteiloberfläche frei von Einfallstellen ist.

Hiermit können vorteilhaft geschäumte Formteile mit einer kompakten Haut und einem geschäumten Kern hergestellt werden. Insbesondere beim vorliegenden Einsatz eines physikalischen Treibmittels (Fluid, insbesondere Gas) ist es vorteilhaft, dass ein höherer Gasdruck als beim Einsatz eines chemischen Treibmittels aufgebaut werden kann, um höher viskose Kunststoffe gut verarbeiten und Formteile mit geringen Wanddicken herstellen zu können. So erfolgt eine gleichmäßige Verteilung des Gases in der Schmelze.

Aufgrund der Viskositätsunterschiede zwischen Gas und Schmelze hat das Gas allerdings die Tendenz, eine oder mehrere große Blasen zu bilden. Um dies zu vermeiden, muss sowohl das Gasvolumen sehr genau zudosiert werden als auch die mit Gas versetzte Schmelze intensiv vermischt werden, wobei die Schmelze unter einem ausreichend hohen Druck gehalten werden muss, um ein unerwünschtes Aufschäumen im Schneckenzylinder zu vermeiden.

Dabei muss verhindert werden, dass das eingespritzte Gas zurück in Richtung des Einfülltrichters gelangt, da dadurch der erforderlich Druck in der Schmelze nicht aufrecht erhalten würde.

Die genannte DE 198 48 151 A1 sieht hierfür vor, den Differenzdruck zwischen Gas und Schmelze bei der Beladung der Schmelze mit Fluid genau zu regeln und das Gas in eine Zone niedrigeren Schmelzedrucks einzuspritzen.

Aus der US 6,322,347 B1 ist ein ähnliches Verfahren bekannt, bei dem andere Vorkehrungen getroffen sind, um den Fluss der Kunststoffschmelze von der Plastifizierung von Kunststoffgranulat über die Beladung mit Fluid bis zur Einspritzung der fluidbeladenen Schmelze in die Werkzeugkavität des Spritzgießwerkzeugs gezielt zu steuern. Hierzu sind Sperrmittel in Form von Sperrringen in einem Mittenbereich der Schnecke angeordnet, so dass hier nur ein Fluss von Kunststoffmaterial in eine Richtung möglich ist.

Nachteilig ist bei dieser Lösung, dass diese Sperrmittel zum einen relativ aufwändig in der Herstellung und Montage sind. Zum anderen unterliegen sie im Betrieb der Spritzgießmaschinen einem relativ hohen Verschleiß, so dass die Sperrmittel wartungsintensiv sind, da sie periodisch ausgewechselt werden müssen.

Der Erfindung liegt daher die **Aufgabe** zugrunde, eine Vorrichtung der gattungsgemäßen Art so weiterzuentwickeln, dass einerseits auf die aufwändigen und verschleißanfälligen Sperrmittel im Mittenbereich der Schnecke verzichtet werden kann, dass andererseits aber sichergestellt ist, dass es zu keinem nachteiligen Verfahrensverlauf insbesondere an dem Ort kommt, an dem Fluid in die Schmelze eingegeben wird, und hier keine Strömungsbewegung des Materials entgegen der Schneckenförderbewegung entsteht, die unerwünscht ist. Mit der so ausgestalteten Vorrichtung soll also eine hohe Prozesssicherheit gewährleistet sein.

Die **Lösung** dieser Aufgabe durch die Erfindung ist dadurch gekennzeichnet, dass die Meteringzone in die Dekompressionszone über einen abgerundeten Bereich des Schneckenkerns übergeht, wobei sich der abgerundete Bereich des Schneckenkerns über einen axialen Abstand zwischen 10 % und 100 % des Schneckendurchmessers, gemessen von der radial außenliegenden Oberfläche des Schneckenstegs, erstreckt, wobei der Bereich der Meteringzone und der Bereich der Dekompressionszone frei sind von mechanischen Sperrelementen zur Beeinflussung der Strömung der Kunststoffschmelze.

Der radiale Abstand zwischen dem Außenradius des mindestens einen Schneckenstegs und dem Radius des Schneckenkerns im Bereich der Dekompressionszone ist dabei größer als der Bereich davor und beträgt bevorzugt mindestens 120 % des radialen Abstands zwischen dem Außenradius des mindestens einen Schneckenstegs und dem Radius des Schneckenkerns im Bereich der Meteringzone. Besonders bevorzugt liegt der radiale Abstand zwischen dem Außenradius des mindestens einen Schneckenstegs und dem Radius des Schneckenkerns im Bereich der Dekompressionszone zwischen 200 % und 2.000 % des radialen Abstands zwischen dem Außenradius des mindestens einen Schneckenstegs und dem Radius des Schneckenkerns im Bereich der Meteringzone. Es ist also in der Dekompressionszone ein signifikant höherer Wert der Schneckenstegtiefe vorgesehen als in der Meteringzone.

Die genannten ersten drei Zonen, d. h. die Einzugszone, die Kompressionszone und die Meteringzone, müssen nicht zwangsläufig exakt gegeneinander abgegrenzt sein. Möglich ist es auch, dass zumindest zwei der Zonen aus der Gruppe Einzugszone, Kompressionszone und Meteringzone als - in Achsrichtung der Schnecke gesehen - kontinuierlich ineinander übergehende Zonen ausgebildet sind. Bevorzugt ist in diesem Falle vorgesehen, dass sich der Radius des Schneckenkerns über die axiale Erstreckung der Plastifizier- und Einspritzschnecke zumindest über Bereiche der axialen Erstreckung der Schnecke kontinuierlich verändert. Derartige Schnecken sind als solche bekannt und werden als kernprogressive Schnecken bezeichnet. Die Einzugszone, die Kompressionszone und die Meteringzone sind dann gegebenenfalls nicht voneinander abgrenzbar, der Einzug des Materials, die Kompression desselben und das Homogenisieren erfolgen dann fließend entlang der axialen Erstreckung der Schnecke. Die Gangtiefe der Schnecke kann dabei vom Ende der Einzugszone, auch schon vom Anfang der Einzugszone an, bis zum Ende der Meteringzone kontinuierlich verringert werden. Demgemäß wären dann im Grenzfall nur noch zwei voneinander abgegrenzte Zonen der Schnecke vorhanden, also die kombinierte Einzugs-, Kompressions- und Meteringzone und die Dekompressionszone, die sich durch einen deutlichen Abfall des Schneckenkerns auszeichnet.

Die Plastifizier- und Einspritzschnecke kann, von ihrer Antriebsseite her gesehen, eine sich an die Dekompressionszone in Richtung Schneckenspitze anschließende weitere Kompressionszone aufweisen, die zum Verdichten der mit Fluid beladenen Kunststoffschmelze dient.

Der Anstieg der Stegtiefe von der Meteringzone in die Dekompressionszone stellt also zum Zusammenspiel mit dem genannten Abstand eine solche Veränderung in der Schneckengeometrie dar, dass der Druck zu Beginn der Dekompressionszone derart abfällt, dass eine Einbringung von Fluid in die homogenisierte Schmelze möglich ist, ohne dass die Tendenz besteht, dass sich die fluidbeladene Schmelze entgegen der Förderrichtung der Schnecke in Richtung Einfülltrichter zurückbewegt - auch ohne, dass entsprechende Sperrelemente vorgesehen sind. Das Gas dringt entsprechend dem Weg des geringsten Widerstandes in Förderrichtung in die Schmelze ein. Der Bereich der Meteringzone und der Bereich der Dekompressionszone sind demgemäß bevorzugt frei von Stauringen und Rückstromsperren.

Die Meteringzone kann mindestens zwei Teilbereiche aufweisen, in denen der radiale Abstand zwischen dem Außenradius des mindestens einen Schneckenstegs und dem Radius des Schneckenkerns unterschiedlich sind. Der an die Dekompressionszone angrenzende Teilbereich weist bevorzugt den geringsten radialen Abstand zwischen dem Außenradius des mindestens einen Schneckenstegs und dem Radius des Schneckenkerns auf.

Die Plastifizier- und Einspritzschnecke kann weiterhin an ihrem, von ihrer Antriebsseite her gesehen, axialen Ende (im Bereich der Schneckenspitze) einen Scher- und Mischbereich aufweisen, in dem ein oder mehrere Scher- und/oder Mischteile angeordnet sind, die zum Mischen der mit Fluid beladenen Kunststoffschmelze ausgebildet sind, wobei im axialen Endbereich des Scher- und Mischbereichs vorzugsweise eine Rückstromsperre angeordnet ist.

Die Schnecke ist erfindungsgemäß also als Mehrzonenschnecke mit vier bis sechs Schneckenzonen ausgebildet. Sie weist eine Einzugszone zum Einziehen des Kunststoffes, eine Kompressionszone zum Aufschmelzen und Verdichten des Materials und eine Meteringzone zur Homogenisierung auf. Die Meteringzone mündet bevorzugt in einen flach geschnittenen Bereich (Übergangszone) ein, der anschließend in die Dekompressionszone (tiefer geschnittener Bereich) übergeht. Im Dekompressionsbereich, der eine Zone niedrigeren Schmelzedrucks ist, erfolgt die Einspritzung des Gases.

Danach wird die Schmelze bevorzugt erneut verdichtet und in einem oder in mehreren Scher- und/oder Mischteilen intensiv mit dem eingespritzten Gas vermischt. Für die Verdichtung müssen nicht zwingend spezifische Elemente vorhanden sein.

Am Ende der Schnecke befindet sich eine Rückstromsperre, wie beim Spritzgießen üblich. Durch den flach geschnittenen Bereich der Meteringzone wird vermieden, dass die mit Treibmittel (Gas) versehene Schmelze zurück in den vorderen Schneckenteil (in Richtung des Einfülltrichters) gelangen kann. Die axiale Länge der Meteringzone und die Gangtiefe werden so gewählt, dass ein ausreichend hohes Druckgefälle erzeugt wird, um ein Zurückfließen der treibmittelhaltigen Schmelze zu vermeiden. Durch die Gangtiefe und die Länge der Meteringzone oder einer sich anschließenden Zwischenzone kann der Druckgradient beeinflusst werden.

Weitere Möglichkeiten zur Beeinflussung des Druckgradienten, der bei der Rotation der Schnecke erzeugt wird, sind die Anzahl der Schneckengänge und deren Steigung. Eine bevorzugte Lösung dieser Art sieht vor, dass im Meteringbereich ein oder mehrere weitere Schneckengänge eingefügt sind. Alternativ oder additiv kann vorgesehen sein, dass die Steigung der Schnecke in diesem Bereich verändert wird.

Die Schnecke ist bevorzugt einteilig ausgebildet.

In vorteilhafter Weise kann die vorgeschlagene Schnecke kostengünstig hergestellt werden. Auf ein Sperrelement, beispielsweise in Form eines Stau- oder Sperrrings oder einer Rückstromsperre, kann verzichtet werden, so dass die verschleißempfindlichen Bauteile reduziert sind.

In der Zeichnung ist ein Ausführungsbeispiel der Erfindung dargestellt. Es zeigen:
- Fig. 1: schematisch eine Vorrichtung zum Spritzgießen,
- Fig. 2: die Seitenansicht eines Teils der Plastifizier- und Einspritzschnecke der Vorrichtung gemäß Fig. 1 und
- Fig. 3: einen vergrößert dargestellten Ausschnitt aus Fig. 2,
- Fig. 4: die Seitenansicht eines Teils der Plastifizier- und Einspritzschnecke, wobei hier im Bereich der Meteringzone ein zweiter Schneckengang gleicher Steigung vorgesehen ist, und
- Fig. 5: die Seitenansicht eines Teils der Plastifizier- und Einspritzschnecke, wobei hier im Bereich der Meteringzone eine steilere Schneckensteigung vorgesehen ist.

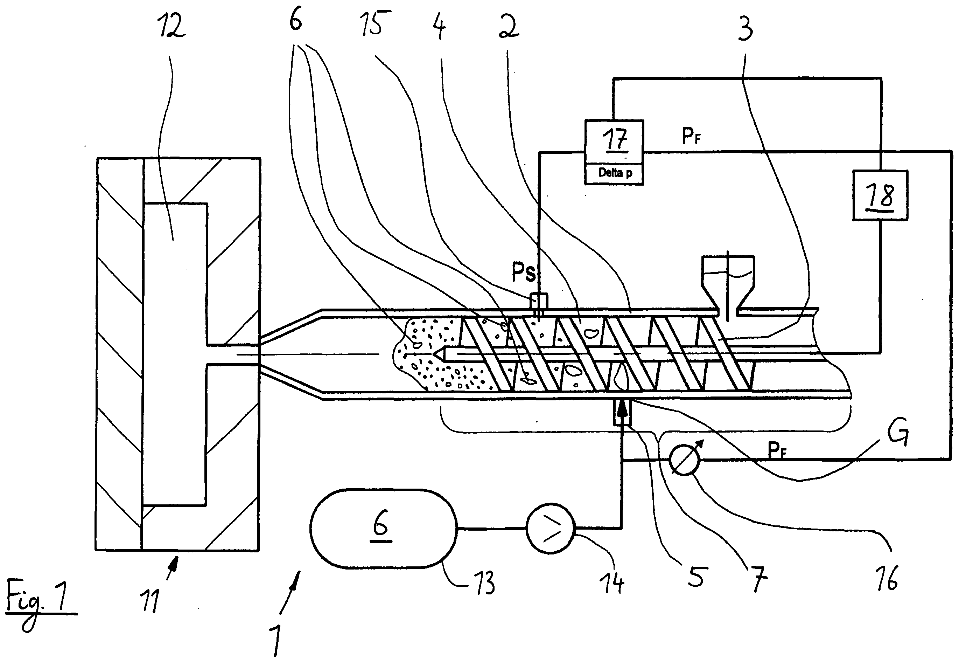

In Fig. 1 ist schematisch eine Vorrichtung zum Spritzgießen 1, also eine Spritzgießmaschine, in einem Verfahrensstadium dargestellt, in dem eine Schmelze-Gas-Mischung hergestellt wird. Später wird die hergestellte Kunststoffschmelze in das Spritzgießwerkzeug 11 eingespritzt, das eine entsprechende Kavität 12 aufweist. Im Schneckenzylinder 2 ist eine Plastifizier- und Einspritzschnecke 3 drehbeweglich und axial verschiebbar angeordnet. Zwecks Herstellung von thermoplastischer Kunststoffschmelze 4 rotiert die Schnecke 3 zunächst ohne Axialbewegung im Schneckenzylinder 2.

Fluid in Form eines Gases 6 ist in einem Vorratsbehälter 13 gespeichert. Es wird einem Verdichter 14 zugeführt, der es auf einen gewünschten Druck bringt. Vom Verdichter 14 aus gelangt das Gas über eine Leitung zu einem Mittel 5 zum Einspritzen des Fluids, nämlich zu einer Einspritzdüse, die am Schneckenzylinder 2 angebracht ist. Nicht dargestellt ist eine Volumenkontrollvorrichtung, mit der das Volumen des eingespritzten Gases geregelt werden kann. Durch die Düse 5 kann das Gas 6 gesteuert bzw. geregelt in den Schneckenzylinder 2 und damit in die Kunststoffschmelze 4 eingespritzt werden. Dies gelingt allerdings nur dann, wenn der Gasdruck p_{F} grösser ist als der Druck in der Schmelze p_{S}, d. h. die Druckdifferenz zwischen dem Druck im Fluid und in der Kunststoffschmelze Delta p = p_{F} - p_{S} muss positiv sein.

Die Eingasung des Gases 6 über die Düse 5 erfolgt an einer axialen Einspritzposition G, an der sich zumindest zeitweise - namentlich während der Plastifizierung von Schmelze - die Schneckengänge 7 der Schnecke 3 befinden.

Wenn genügend Schmelze-Gas-Gemisch für einen Schuss produziert ist, kann das Gemisch in die Kavität 12 des Spritzgießwerkzeugs 11 eingespritzt werden, was nicht dargestellt ist.

Zur Schaffung eines stabilen Spritzgießprozesses wird dafür Sorge getragen, dass die Druckdifferenz Delta p weitgehend konstant bleibt, zumindest in einem vorgegebenen Toleranzbereich, der z. B. 2 bar betragen kann. Die Vorrichtung ist dafür mit einem Drucksensor 15 zur Messung des Drucks p_{S} in der Schmelze 4, mit einem Drucksensor 16 zur Messung des Gasdrucks p_{F} sowie mit einem Differenzbilder 17 zur Bestimmung der Druckdifferenz Delta p = p_{F} - p_{S} ausgestattet. Die gemessene Druckdifferenz wird der Steuerung 18 der Spritzgießmaschine zugeleitet, die gemäß einem Programm dafür Sorge tragen kann, dass dieser Wert innerhalb eines vorgegebenen Toleranzbandes bleibt. Als Eingriffsmöglichkeiten dienen diejenigen Spritzgießparameter, die dem Fachmann dafür geläufig sind, z. B. die Drehzahl der Schnecke und die axiale Kraft beim Einspritzen von Schmelze. Es ist evident, dass eine Reduzierung der Einspritzkraft den Schmelzedruck reduziert, worüber eine Eingriffsmöglichkeit besteht. Andererseits können auch der Gasdruck p_{F} und/oder das Gasvolumen entsprechend geregelt werden, um die gewünschte Druckdifferenz Delta p einzuhalten.

Statt eines Gases kann ebenso natürlich auch ein anderes Fluid, also eine Flüssigkeit, der Schmelze zugegeben werden.

Durch die Fluidzugabe wird erreicht, dass ein Formteil aus einem Kunststoff-Gas-Gemisch hergestellt wird, das keine Einfallstellen und im Inneren eine Schaumstruktur aufweist. Damit können insbesondere auch große, geschäumte Kunststoff-Formteile wie Platten und Formteile mit dreidimensionaler Geometrie auch mit unterschiedlichen Wanddicken und Verrippungen prozesssicher und preiswert hergestellt werden.

Um ein vorzeitiges Aufschäumen der Kunststoff-Gas- oder Kunststoff-Flüssigkeits-Mischung in der Kavität zu verhindern, kann vor der Injektion der Mischung in der Kavität ein Gegendruck aufgebaut werden, der erst allmählich mit dem Eintritt der Mischung abgebaut wird; der Schmelzefließfront wird somit ein Gaspolster entgegengesetzt. Das Aufschäumen kann darüber gesteuert bzw. geregelt werden.

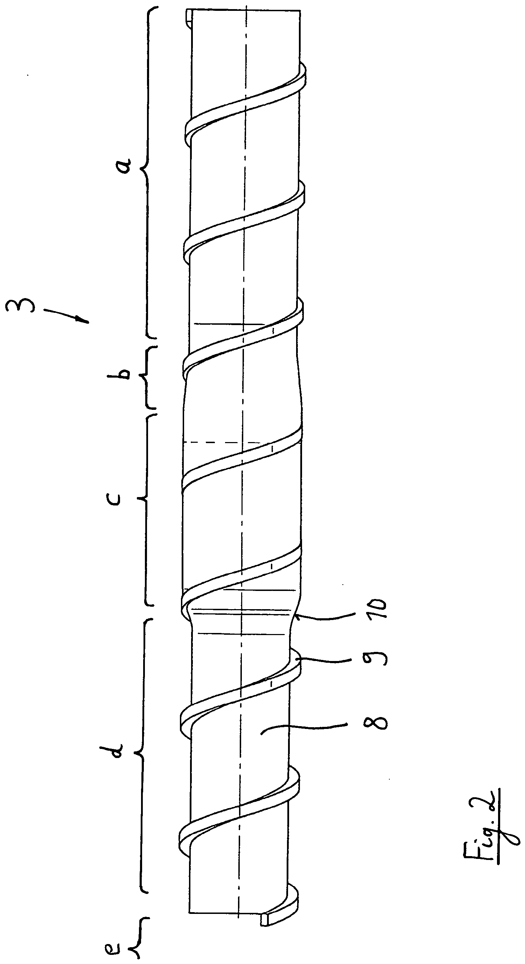

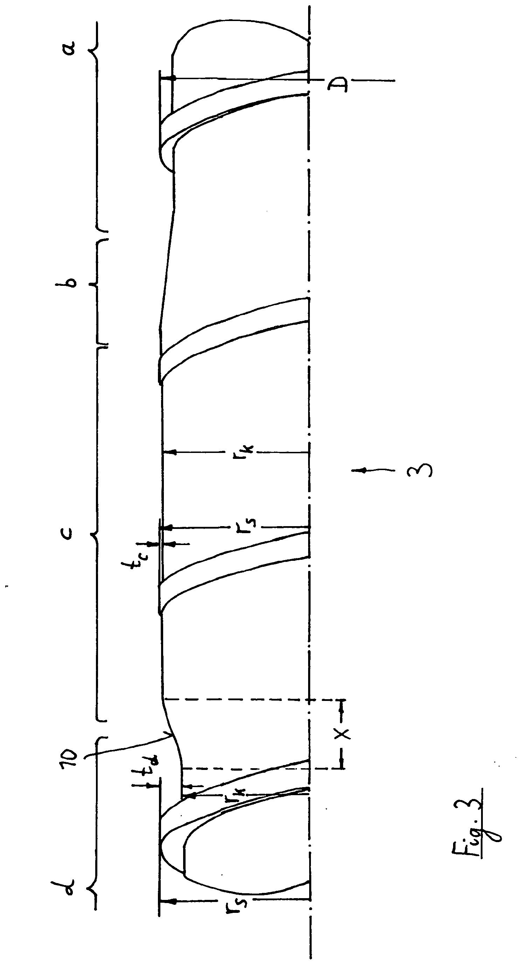

In Fig. 2 und Fig. 3 ist die zum Einsatz kommende Plastifizier- und Einspritzschnecke 3 dargestellt. Die Schnecke 3 weist fünf Zonen auf, von denen nur vier dargestellt sind, nämlich eine Einzugszone a, eine sich vom rechts gelegenen Antrieb her gesehen anschließende Kompressionszone b, eine sich weiter anschließende Meteringzone c und eine sich weiter anschließende Dekompressionszone d; eine sich - allerdings nur optional - weiterhin anschließende weitere Kompressionszone e ist nicht mehr dargestellt.

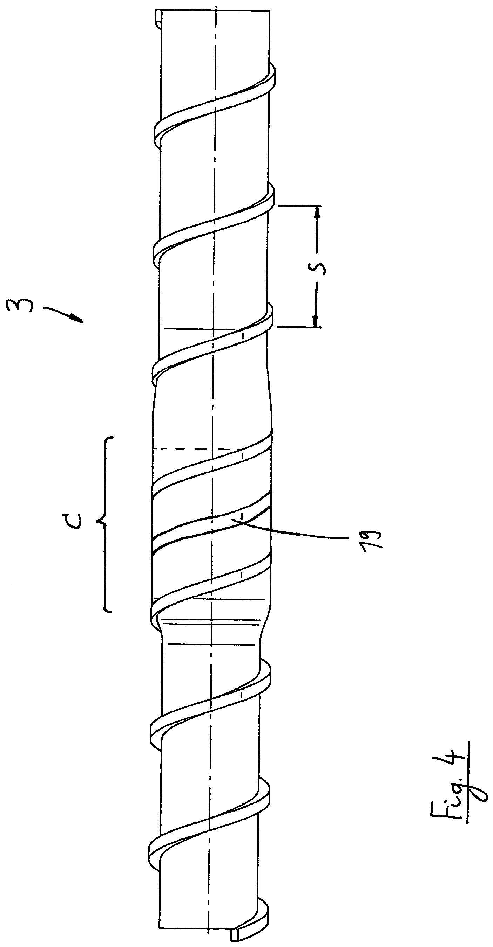

In Fig. 4 ist eine Schnecke 3 dargestellt, die im Bereich der Meteringzone c einen zweiten Schneckengang 19 aufweist; die Schnecke ist in diesem Bereich also zweigängig ausgebildet. Die Schneckensteigung s ist indes über die gesamte axiale Erstreckung der Schnecke 3 konstant.

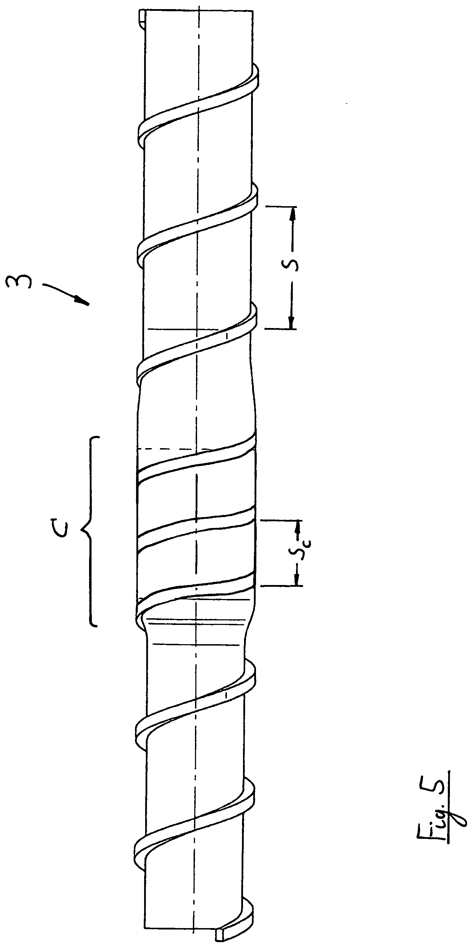

Als Alternative hierzu zeigt Fig. 5 eine Schnecke, die zwar über die gesamte axiale Erstreckung der Schnecke eingängig ausgebildet ist. Allerdings ist hier im Bereich der Meteringzone c vorgesehen, dass die Schneckensteigung vor steiler ist; sie ist mit s_{c} angegeben.

Mit beiden Konzepten kann erreicht werden, dass sich im Bereich der Meteringzone ein höherer Druck aufbaut.

Die Schnecke weist einen Schneckenkern 8 auf, der entlang des axialen Verlaufs der Schnecke 3 im Radius variabel ist; er ist mit r_{K} bezeichnet. Um den Schneckenkern 8 herum erstreckt sich wendelartig in bekannter Weise ein Schneckensteg 9. Dessen Außenradius ist konstant und mit r_{S} angegeben.

Die jeweilige Differenz zwischen Schneckenstegradius r_{S} und Schneckenkernradius r_{K} ergibt eine Stegtiefe t. Diese ist für den Bereich der Meteringzone mit t_{c} und für den Bereich der Dekompressionszone d mit t_{d} angegeben.

Der Übergang zwischen der Meteringzone c und der Dekompressionszone d erfolgt über einen abgerundeten Bereich 10; hier steigt die Stegtiefe signifikant vom Wert t_{c} auf den Wert t_{d} an. Der Wert t_{d} beträgt dabei bevorzugt das 2- bis 20-fache des Werts t_{c}. Auch der Übergang zwischen den beiden Bereichen muss hinreichend spontan erfolgen. Bewährt hat sich eine axiale Erstreckung x dieses Übergangsbereichs 10, der zwischen 10 % und 100 % des Schneckendurchmessers D liegt.

Nicht zu erkennen ist, dass der Bereich der Meteringzone c nicht notwendigerweise einen konstanten Verlauf der Stegtiefe t_{c} haben muss. Es kann vorgesehen werden, dass sich die Stegtiefe t_{c} in Richtung auf die Dekompressionszone d hin verringert.

In jedem Falle ergibt sich durch den rapiden Anstieg der Stegtiefe t_{c} zu Beginn der Dekompressionszone d ein solcher Druckabfall in der Schmelze, dass hier problemlos Gas 6 zugegeben werden kann, ohne dass die Gefahr besteht, dass die fluidbeladene Schmelze entgegen der Förderrichtung der Schmelze strömt (die Förderrichtung der Schnecke ist in den Figuren von rechts nach links).

Auf Sperrelemente in diesem Bereich kann also verzichtet werden.

### Bezugszeichenliste:

- 1: Vorrichtung zum Spritzgießen
- 2: Schneckenzylinder
- 3: Plastifizier- und Einspritzschnecke
- 4: Kunststoffschmelze
- 5: Mittel zum Einspritzen eines Fluids
- 6: Fluid (Gas)
- 7: Schneckengang
- 8: Schneckenkern
- 9: Schneckensteg
- 10: abgerundeter Bereich
- 11: Spritzgießwerkzeug
- 12: Kavität
- 13: Vorratsbehälter
- 14: Verdichter
- 15: Drucksensor für Schmelze
- 16: Drucksensor für Gas
- 17: Differenzbilder
- 18: Steuerung / Regelung
- 19: zweiter Schneckengang

- G: Einspritzposition für Fluid (Gas)

- a: Einzugszone
- b: Kompressionszone
- c: Meteringzone
- d: Dekompressionszone
- e: Kompressionszone

- t_{c}: radialer Abstand (Stegtiefe)
- t_{d}: radialer Abstand (Stegtiefe)
- r_{S}: Außenradius des Schneckenstegs
- r_{K}: Radius des Schneckenkerns
- D: Schneckendurchmesser
- x: Abstand
- s: Schneckensteigung
- s_{c}: Schneckensteigung im Bereich c

- p_{F}: Gasdruck
- p_{S}: Schmelzedruck
- Delta p: Druckdifferenz: p_{F} - p_{S}

## Patentansprüche

1. Vorrichtung (1) zum Spritzgießen von Kunststoff-Formteilen aus thermoplastischem Kunststoff, wobei die Vorrichtung umfasst:
einen Schneckenzylinder (2) mit einer sich darin befindlichen, sowohl rotatorisch als auch translatorisch bewegbaren Plastifizier- und Einspritzschnecke (3) zum Herstellen von thermoplastischer Kunststoffschmelze (4) und
Mittel (5) zum Einspritzen eines Fluids (6) an einer axialen Einspritzposition (G) des Schneckenzylinders (2), wobei die Plastifizier- und Einspritzschnecke (3) im Schneckenzylinder (2) so anordenbar ist, dass sich zumindest zeitweise Schneckengänge (7) an der axialen Einspritzposition (G) befinden,
wobei die Plastifizier- und Einspritzschnecke (3) als Mehrzonenschnecke ausgebildet ist und wobei die Plastifizier- und Einspritzschnecke (3) einen Schneckenkern (8) aufweist, um den herum sich mindestens ein Schneckensteg (9) wendelartig erstreckt,
wobei die Plastifizier- und Einspritzschnecke (3), von ihrer Antriebsseite her gesehen, mindestens vier sich in Achsrichtung anschließende Zonen (a, b, c, d) aufweist,
wobei die erste Zone (a) eine Einzugszone ist, die zum Einziehen von Kunststoffmaterial dient,
wobei die zweite Zone (b) eine Kompressionszone ist, die zum Aufschmelzen und Verdichten des Kunststoffmaterials dient,
wobei die dritte Zone (c) eine Meteringzone ist, die zur Homogenisierung der erzeugten Kunststoffschmelze dient, wobei in der Meteringzone zumindest abschnittsweise ein radialer Abstand (t_{c}) zwischen dem Außenradius (r_{S}) des mindestens einen Schneckenstegs (9) und dem Radius (r_{K}) des Schneckenkerns (8) vorliegt,
wobei die vierte Zone (d) eine Dekompressionszone ist, wobei in der Dekompressionszone der radiale Abstand (t_{d}) zwischen dem Außenradius (r_{S}) des mindestens einen Schneckenstegs (9) und dem Radius (r_{K}) des Schneckenkerns (8) vorliegt, wobei der radiale Abstand (t_{c}, t_{d}) zwischen dem Außenradius (r_{S}) des mindestens einen Schneckenstegs (9) und dem Radius (r_{K}) des Schneckenkerns (8) im Bereich der Dekompressionszone (d) zumindest abschnittsweise größer ist als im Bereich der Meteringzone (c),
wobei die Plastifizier- und Einspritzschnecke (3) so verschiebbar angeordnet ist, dass sie eine solche axiale Lage im Schneckenzylinder (2) einnehmen kann, dass sich die Mittel (5) zum Einspritzen eines Fluids (6) im Bereich der Dekompressionszone (d) befinden,
wobei die Meteringzone (c) in die Dekompressionszone (d) über einen abgerundeten Bereich (10) des Schneckenkerns (8) übergeht, wobei sich der abgerundete Bereich (10) des Schneckenkerns (8) über einen axialen Abstand (x) zwischen 10 % und 100 % des Schneckendurchmessers (D),
gemessen von der radial außenliegenden Oberfläche des Schneckenstegs (9), erstreckt und
wobei der Bereich der Meteringzone (c) und der Bereich der Dekompressionszone (d) frei sind von mechanischen Sperrelementen zur Beeinflussung der Strömung der Kunststoffschmelze.

2. Vorrichtung nach Anspruch 1, **dadurch gekennzeichnet, dass** der radiale Abstand (t_{d}) zwischen dem Außenradius (r_{S}) des mindestens einen Schneckenstegs (9) und dem Radius (r_{K}) des Schneckenkerns (8) im Bereich der Dekompressionszone (d) mindestens 120 % des radialen Abstands (t_{c}) zwischen dem Außenradius (r_{S}) des mindestens einen Schneckenstegs (9) und dem Radius (r_{K}) des Schneckenkerns (8) im Bereich der Meteringzone (c) beträgt.

3. Vorrichtung nach Anspruch 2, **dadurch gekennzeichnet, dass** der radiale Abstand (t_{d}) zwischen dem Außenradius (r_{S}) des mindestens einen Schneckenstegs (9) und dem Radius (r_{K}) des Schneckenkerns (8) im Bereich der Dekompressionszone (d) zwischen 200 % und 2.000 % des radialen Abstands (t_{c}) zwischen dem Außenradius (r_{S}) des mindestens einen Schneckenstegs (9) und dem Radius (r_{K}) des Schneckenkerns (8) im Bereich der Meteringzone (c) beträgt.

4. Vorrichtung nach einem der Ansprüche 1 bis 3, **dadurch gekennzeichnet, dass** zumindest zwei der Zonen aus der Gruppe Einzugszone (a), Kompressionszone (b) und Meteringzone (c) als in Achsrichtung der Schnecke gesehen kontinuierlich ineinander übergehende Zonen ausgebildet sind, wobei sich der Radius (r_{K}) des Schneckenkerns (8) über die axiale Erstreckung der Plastifizier- und Einspritzschnecke (3) zumindest abschnittsweise kontinuierlich verändert.

5. Vorrichtung nach einem der Ansprüche 1 bis 4, **dadurch gekennzeichnet, dass** die Plastifizier- und Einspritzschnecke (3), von ihrer Antriebsseite her gesehen, eine sich an die Dekompressionszone (d) anschließende weitere Kompressionszone (e) aufweist, die zum Verdichten der mit Fluid (6) beladenen Kunststoffschmelze dient.

6. Vorrichtung nach einem der Ansprüche 1 bis 5, **dadurch gekennzeichnet, dass** der Bereich der Meteringzone (c) und der Bereich der Dekompressionszone (d) frei sind von Stauringen und Rückstromsperren.

7. Vorrichtung nach einem der Ansprüche 1 bis 6, **dadurch gekennzeichnet, dass** die Meteringzone (c) mindestens zwei Teilbereiche aufweist, in denen der radiale Abstand (t_{c}) zwischen dem Außenradius (r_{S}) des mindestens einen Schneckenstegs (9) und dem Radius (r_{K}) des Schneckenkerns (8) unterschiedlich sind.

8. Vorrichtung nach Anspruch 7, **dadurch gekennzeichnet, dass** der an die Dekompressionszone (d) angrenzende Teilbereich den geringsten radialen Abstand zwischen dem Außenradius (r_{S}) des mindestens einen Schneckenstegs (9) und dem Radius (r_{K}) des Schneckenkerns (8) aufweist.

9. Vorrichtung nach einem der Ansprüche 1 bis 8, **dadurch gekennzeichnet, dass** die Plastifizier- und Einspritzschnecke (3) an ihrem, von ihrer Antriebsseite her gesehen, axialen Ende einen Scher- und Mischbereich aufweist, in dem ein oder mehrere Scher- und/oder Mischteile angeordnet sind, die zum Mischen der mit Fluid (6) beladenen Kunststoffschmelze ausgebildet sind.

10. Vorrichtung nach Anspruch 9, **dadurch gekennzeichnet, dass** im axialen Endbereich des Scher- und Mischbereichs eine Rückstromsperre angeordnet ist.

## Claims

1. Device (1) for injection moulding of plastic parts made of thermoplastic material, wherein the device comprises:
a screw cylinder (2) with a plastification and injection screw (3) which is arranged in the cylinder and which is rotatory as well as translational movable in the same for the production of thermoplastic plastic melt (4)
and
means (5) for injection of a fluid (6) at an axial injection position (G) of the screw cylinder (2), wherein the plastification and injection screw (3) can be arranged in the screw cylinder (2) in such a manner that at least temporary screw channels (7) are arranged at the axial injection position (G),
wherein the plastification and injection screw (3) is designed as multi zone screw and wherein the plastification and injection screw (3) comprises a screw core (8) around which at least one screw flight (9) extends in a helical manner,
wherein the plastification and injection screw (3) comprises, seen from its driven side, at least four zones (a, b, c, d) which join in axial direction,
wherein the first zone (a) is a feed zone which serves for feeding of plastic material,
wherein the second zone (b) is a compression zone which serves for melting and compression of the plastic material,
wherein the third zone (c) is a metering zone which serves for homogenisation of the produced plastic melt, wherein in the metering zone at least in sections a radial distance (t_{c}) is given between the outer radius (r_{S}) of the at least one screw flight (9) and the radius (r_{K}) of the screw core (8),
wherein the fourth zone (d) is a decompression zone, wherein in the decompression zone the radial distance (t_{d}) is given between the outer radius (r_{S}) of the at least one screw flight (9) and the radius (r_{K}) of the screw core (8), wherein the radial distance (t_{c}, t_{d}) between the outer radius (r_{S}) of the at least one screw flight (9) and the radius (r_{K}) of the screw core (8) in the region of the decompression zone (d) is at least in sections larger than in the region of the metering zone (c),
wherein the plastification and injection screw (3) is arranged movable in such a manner that it can take such an axial position in the screw cylinder (2) that the means (5) for injection of a fluid (6) are arranged in the region of the decompression zone (d),
wherein the metering zone (c) merges with the decompression zone (d) via a rounded region (10) of the screw core (8), wherein the rounded region (10) of the screw core (8) extends along an axial distance (x) between 10 % and 100 % of the screw diameter (D), measured from the radial outer surface of the screw flight (9) and
wherein the region of the metering zone (c) and the region of the decompression zone (d) are free from mechanical blocking devices for influencing of the flow of the plastic melt.

2. Device according to claim 1, **characterized in that** the radial distance (t_{d}) between the outer radius (r_{S}) of the at least one screw flight (9) and the radius (r_{K}) of the screw core (8) in the region of the decompression zone (d) is at least 120 % of the radial distance (t_{c}) between the outer radius (r_{S}) of the at least one screw flight (9) and the radius (r_{K}) of the screw core (8) in the region of the metering zone (c).

3. Device according to claim 2, **characterized in that** the radial distance (t_{d}) between the outer radius (r_{S}) of the at least one screw flight (9) and the radius (r_{K}) of the screw core (8) in the region of the decompression zone (d) is between 200 % and 2,000 % of the radial distance (t_{c}) between the outer radius (r_{S}) of the at least one screw flight (9) and the radius (r_{K}) of the screw core (8) in the region of the metering zone (c).

4. Device according to one of claim 1 to 3, **characterized in that** at least two of the zones of the group feed zone (a), compression zone (b) and metering zone (c) are designed as, seen in axial direction of the screw, zones which merge with another in a continuous manner, wherein the radius (r_{K}) of the screw core (8) changes at least in sections continuously along the axial extension of the plastification and injection screw (3).

5. Device according to one of claims 1 to 4, **characterized in that** the plastification and injection screw (3), seen from its driven side, comprises a further compression zone (e) which joins to the decompression zone (d) which serves for the compression of the melt which is loaded with fluid (6).

6. Device according to one of claims 1 to 5, **characterized in that** the region of the metering zone (c) and the region of the decompression zone (d) are free from retention rings and non-return valves.

7. Device according to one of claims 1 to 6, **characterized in that** the metering zone (c) comprises at least two partitions in which the radial distance (t_{c}) between the outer radius (r_{S}) of the at least one screw flight (9) and the radius (r_{K}) of the screw core (8) is different.

8. Device according to claim 7, **characterized in that** the partition which adjoins to the decompression zone (d) comprises the smallest radial distance between the outer radius (r_{S}) of the at least one screw flight (9) and the radius (r_{K}) of the screw core (8).

9. Device according to one of claims 1 to 8, **characterized in that** the plastification and injection screw (3) comprises, seen from the driven side, at its axial end a shearing and mixing zone in which one or more shearing and/or mixing elements are arranged which are designed for the mixing of the plastic melt which is loaded with the fluid (6).

10. Device according to claim 9, **characterized in that** a non-return valve is arranged in the axial end region of the shearing and mixing zone.

## Revendications

1. Dispositif (1) pour le moulage par injection de pièces moulées en matière synthétique constituée d'une matière synthétique thermoplastique, dans lequel le dispositif comprend:
un cylindre à vis sans fin (2) avec une vis de plastification et d'injection (3) se trouvant dans celui-ci et déplaçable aussi bien en rotation qu'en translation pour la préparation d'un bain fondu de matière synthétique thermoplastique (4) et
des moyens (5) pour injecter un fluide (6) en un point d'injection axial (G) du cylindre à vis sans fin (2), dans lequel la vis de plastification et d'injection (3) peut être disposée dans le cylindre à vis sans fin (2) de telle manière que des filets de vis (7) se trouvent au moins temporairement au point d'injection axial (G), dans lequel la vis de plastification et d'injection (3) est une vis sans fin à plusieurs zones et dans lequel la vis de plastification et d'injection (3) présente un noyau de vis sans fin (8), autour duquel s'étend en hélice au moins une nervure de vis sans fin (9),
dans lequel la vis de plastification et d'injection (3), vue depuis son côté d'entraînement, présente au moins quatre zones (a, b, c, d) se raccordant en direction axiale,
dans lequel la première zone (a) est une zone d'aspiration, qui sert pour introduire le matériau de matière synthétique,
dans lequel la deuxième zone (b) est une zone de compression, qui sert pour fondre et comprimer le matériau de matière synthétique,
dans lequel la troisième zone (c) est une zone de dosage, qui sert pour l'homogénéisation du bain fondu de matière synthétique produit, dans lequel il existe dans la zone de dosage au moins localement une distance radiale (t_{c}) entre le rayon extérieur (r_{S}) de ladite au moins une nervure de vis sans fin (9) et le rayon (r_{K}) du noyau de vis sans fin (8),
dans lequel la quatrième zone (d) est une zone de décompression, dans lequel il existe dans la zone de décompression la distance radiale (t_{d}) entre le rayon extérieur (r_{S}) de ladite au moins une nervure de vis sans fin (9) et le rayon (r_{K}) du noyau de vis sans fin (8), dans lequel la distance radiale (t_{c}, t_{d}) entre le rayon extérieur (r_{S}) de ladite au moins une nervure de vis sans fin (9) et le rayon (r_{K}) du noyau de vis sans fin (8) dans la région de la zone de décompression (d) est au moins localement plus grande que dans la région de la zone de dosage (c),
dans lequel la vis de plastification et d'injection (3) est disposée de façon déplaçable, de telle manière qu'elle puisse occuper une position axiale dans le cylindre à vis sans fin (2) telle que les moyens (5) d'injection d'un fluide (6) se trouvent dans la région de la zone de décompression (d),
dans lequel la zone de dosage (c) se prolonge dans la zone de décompression (d) par une région arrondie (10) du noyau de vis sans fin (8), dans lequel la région arrondie (10) du noyau de vis sans fin (8) couvre une distance axiale (x) entre 10 % et 100 % du diamètre de la vis sans fin (D), mesuré depuis la surface radialement extérieure de la nervure de vis sans fin (9), et
dans lequel la région de la zone de dosage (c) et la région de la zone de décompression (d) sont dépourvues d'éléments de fermeture mécaniques destinés à influencer l'écoulement du bain fondu de matière synthétique.

2. Dispositif selon la revendication 1, **caractérisé en ce que** la distance radiale (t_{d}) entre le rayon extérieur (r_{S}) de ladite au moins une nervure de vis sans fin (9) et le rayon (r_{K}) du noyau de vis sans fin (8) dans la région de la zone de décompression (d) vaut au moins 120 % de la distance radiale (t_{c}) entre le rayon extérieur (r_{S}) de ladite au moins une nervure de vis sans fin (9) et le rayon (r_{K}) du noyau de vis sans fin (8) dans la région de la zone de dosage (c).

3. Dispositif selon la revendication 2, **caractérisé en ce que** la distance radiale (t_{d}) entre le rayon extérieur (r_{S}) de ladite au moins une nervure de vis sans fin (9) et le rayon (r_{K}) du noyau de vis sans fin (8) dans la région de la zone de décompression (d) vaut entre 200 % et 2 000 % de la distance radiale (t_{c}) entre le rayon extérieur (r_{S}) de ladite au moins une nervure de vis sans fin (9) et le rayon (r_{K}) du noyau de vis sans fin (8) dans la région de la zone de dosage (c).

4. Dispositif selon l'une quelconque des revendications 1 à 3, **caractérisé en ce qu'**au moins deux des zones du groupe de la zone d'aspiration (a), de la zone de compression (b) et de la zone de dosage (c) sont formées, en regardant dans la direction axiale de la vis sans fin, comme des zones se prolongeant en continu l'une dans l'autre, dans lequel le rayon (r_{K}) du noyau de vis sans fin (8) varie au moins localement de façon continue sur l'extension axiale de la vis de plastification et d'injection (3).

5. Dispositif selon l'une quelconque des revendications 1 à 4, **caractérisé en ce que** la vis de plastification et d'injection (3), vue depuis son côté d'entraînement, présente une autre zone de compression (e) se raccordant à la zone de décompression (d), qui sert pour la compression du bain fondu de matière synthétique chargé de fluide (6).

6. Dispositif selon l'une quelconque des revendications 1 à 5, **caractérisé en ce que** la région de la zone de dosage (c) et la région de la zone de décompression (d) sont dépourvues de bagues de retenue et de clapets antiretour.

7. Dispositif selon l'une quelconque des revendications 1 à 6, **caractérisé en ce que** la zone de dosage (c) présente au moins deux régions partielles, dans lesquelles la distance radiale (t_{c}) entre le rayon extérieur (r_{S}) de ladite au moins une nervure de vis sans fin (9) et le rayon (r_{K}) du noyau de vis sans fin (8) est différente.

8. Dispositif selon la revendication 7, **caractérisé en ce que** la région partielle adjacente à la zone de décompression (d) présente la plus petite distance radiale entre le rayon extérieur (r_{S}) de ladite au moins une nervure de vis sans fin (9) et le rayon (r_{K}) du noyau de vis sans fin (8).

9. Dispositif selon l'une quelconque des revendications 1 à 8, **caractérisé en ce que** la vis de plastification et d'injection (3) présente, vue depuis son côté d'entraînement, à son extrémité axiale une région de cisaillement et de mélange, dans laquelle est/sont disposée(s) une ou plusieurs partie(s) de cisaillement et/ou de mélange, qui sont conçues pour le mélange du bain fondu de matière synthétique chargé de fluide (6).

10. Dispositif selon la revendication 9, **caractérisé en ce qu'**un clapet antiretour est disposé dans la région d'extrémité axiale de la région de cisaillement et de mélange.
